Europäisches Patentamt

(19) European Patent Office

Office européen des brevets

(11) EP 0 934 812 A2

(12) EUROPEAN PATENT APPLICATION

(43) Date of publication:
11.08.1999 Bulletin 1999/32

(51) Int. Cl.⁶: $B29C\ 55/06$, $B32B\ 31/00$
// $B29K23{:}00$

(21) Application number: 99102094.2

(22) Date of filing: 02.02.1999

(84) Designated Contracting States:
AT BE CH CY DE DK ES FI FR GB GR IE IT LI LU
MC NL PT SE
Designated Extension States:
AL LT LV MK RO SI

(30) Priority: 04.02.1998 JP 2350198
14.05.1998 JP 13210498
24.09.1998 JP 27002698
19.10.1998 JP 29687598

(71) Applicant: SEKISUI SEIKEI LTD.
Osaka-shi Osaka (JP)

(72) Inventors:
• Ito, Takao
Kita-ku, Osaka-shi, Osaka (JP)
• Ishisaka, Norihiro
Kita-ku, Osaka-shi, Osaka (JP)
• Nakamura, Masanori
Kamitoba, Minami-ku, Kyoto-shi, Kyoto (JP)
• Hirata, Masanori
Kamitoba, Minami-ku, Kyoto-shi, Kyoto (JP)
• Noguchi, Kazuhiro
Kamitoba, Minami-ku, Kyoto-shi, Kyoto (JP)
• Sugahara, Hiroshi
Kamitoba, Minami-ku, Kyoto-shi, Kyoto (JP)

(74) Representative:
TER MEER STEINMEISTER & PARTNER GbR
Mauerkircherstrasse 45
81679 München (DE)

(54) **Polyolefin strip and method for manufacture thereof**

(57) A polyolefin strip including a synthetic resin line (1) composed primarily of polyolefin having a weight average molecular weight of not higher than 500,000 and uniaxially oriented at an overall orientation ratio of at least 10, as well as a method for manufacturing a polyolefin strip including the steps of calendering a substrate sheet composed primarily of polyolefin having a weight average molecular weight of not higher than 500,000 and stretching the calendered sheet so that the substrate sheet is uniaxially oriented at an overall orientation ratio of at least 10.

FIG. 1

## Description

### FIELD OF THE INVENTION

The present invention relates to a polyolefin strip suitable for various uses such as a twist-tie tape for tying plural parts or members together and dried or artificial flower making, as well as to a method for manufacture thereof, more particularly to a polyolefin strip which can be easily twisted by hand and retain the shape given by the twisting upon release of hand and a method for manufacture thereof.

### BACKGROUND OF THE INVENTION

Twist-tie strips have been conventionally used which can tie plural parts or members together with easy twisting thereof by hand. As a typical twist-tie strip, a metal wire is commercially available which is at its outer surface covered with a plastic film, such as polyvinyl chloride and polyethylene terephthalate, or a paper. Such a twist-tie strip utilizes the shape retaining property of the metal wire, i.e., the property of the metal wire which, when bent to a shape by hand, can retain the shape even after release of hand.

However, recycling of the twist-tie strip of this type has been impaired by its major incorporation of the metal wire. Also, its use in a farmland, for example, presents a potential problem that cattle may accidentally eat such a strip to have digestive troubles.

As an alternative to the aforementioned twist-tie strip utilizing the metal wire, another type of twist-tie strip had been proposed which consists primarily of a synthetic resin. For example, Japanese Patent Laying-Open No. Hei 3-124573 (1991) discloses a solid twist-tie composed of a mixture of a crystalline thermoplastic resin and finely-divided glass beads. The thermoplastic resin is comprised of one or more of ultra-high-molecular-weight polyethylene, polypropylene, polyamide, polybutylene terephthalate and polyethylene terephthalate. The glass beads have particle sizes of not greater than 60 $\mu$m. The incorporation of the finely-divided glass beads, instead of the aforementioned metal wire, imparts a torsion retaining property or torsional retention to the solid twist-tie.

Again, the use of glass beads becomes disadvantageous when recycling of the twist-tie is contemplated. There is another problem, i.e., wear of a screw caused by the glass beads when a solid twist-tie is extruded. While the torsion retaining property is given by the addition of the glass beads to the crystalline thermoplastic synthetic resin, its degree is not as sufficient as that of the conventional twist-tie strip utilizing the metal wire.

### SUMMARY OF THE INVENTION

It is an object of the present invention to provide a polyolefin strip which can solve the aforementioned problems encountered with the conventional twist-tie strips, which is an excellent recycle, and which can exhibit a sufficient degree of torsional retention when twisted by hand. It is another object of the present invention to provide a method for manufacturing the polyolefin strip.

The polyolefin strip in accordance with the present invention includes a synthetic resin line composed primarily of polyolefin having a weight average molecular weight of not higher than 500,000 and uniaxially oriented at an overall orientation ratio of at least 10, and which, when deformed to a shape, exhibits the ability to retain the deformed shape. The term "line", as used herein, refers to an elongate form of materials, as ties, threads, wires, ribbons or tapes.

Due to the use of the synthetic resin line composed primarily of polyolefin having a weight average molecular weight of not higher than 500,000 and uniaxially oriented at an overall orientation ratio of at least 10, the polyolefin strip of the present invention has a suitable rigidity, can be easily twisted by hand, and has the ability to retain the shape given by the twisting. Accordingly, the polyolefin strip can be readily twisted by hand and is able to tie plural parts or members together without difficulty, as analogous to the conventional twist-tie strip composed primarily of the metal wire.

Also, the polyolefin strip in accordance with the present invention excludes metal wire or glass beads and is composed primarily of a synthetic resin, which makes the polyolefin strip highly recyclable. The exclusion of glass beads also results in a reduced load on an extruder. This is contrary to the conventional twist-tie strip incorporating glass beads which, when extruded, problematically causes wear of an extruder screw.

The aforementioned synthetic resin line may preferably contain 30 or lower parts by weight of polyolefin, different in type of the above-specified polyolefin, relative to 100 parts by weight of the above-specified polyolefin having a weight average molecular weight of not higher than 500,000.

It may also be preferred that the synthetic resin line contains from 10 to 80 parts by weight of a soft component relative to 100 parts by weight of the polyolefin having a weight average molecular weight of not higher than 500,000. In such a case, the presence of soft component is effective to improve the ability of the strip to retain the shape given by twisting.

Also in the polyolefin strip of the present invention, two or more of the aforementioned synthetic resin line may be laminated together to provide a laminate-form synthetic resin line which preferably has a cross-sectional area in the range of 0.5 - 10 mm$^2$.

This laminate-form synthetic resin line may incorporate a laminating material layer interposed between the adjacent two synthetic resin lines.

The polyolefin strip of the present invention may have at least one surface carrying thereon a soft or non-rigid resin cover layer. The frictional resistance of the cover layer serves to further improve the ability of the strip to retain the shape given by twisting.

In the polyolefin strip of the present invention, a wing-forming synthetic resin member may be incorporated in the synthetic resin line to form wings which extend widthwise beyond side edges of the synthetic resin line. The provision of such wings, depressively deformable when subjected to twisting, results in the enhanced property of the strip to retain the shape given by the twisting.

Preferably, the wing-forming member has at least one surface on which a number of ridges extending between both widthwise ends of the wing-forming member are arranged at intervals along a length direction of the synthetic resin line. When opposite longitudinal ends of such constructed polyolefin stip encircling a plurality of members are twist tied together, as by hand, those members can be tied tightly by the following reason. When twist tied together, a wing portion of one strip end is compressed by a counter strip end to deform to a depressed configuration along which a wing portion of the counter strip end is twist deformed to cover the wing portion of the one strip end. In addition, the ridges provided on the one strip end are brought to come into the respective spaces defined between adjacent ridges on the counter strip end. This prevents the two strip ends from being pulled apart, resulting in the increased twist-tying strength of the polyolefin strip.

It is desired that a direction in which the above-described ridges extend is generally parallel to or inclined at an angle of within ± 20 degrees with respect to a direction perpendicular to the length direction of the synthetic resin line.

In the present invention, the aforementioned polyolefin having a weight average molecular weight of not higher than 500,000 may preferably be high-density polyethylene.

A minimum weight average molecular weight of this polyolefin is not particularly specified, but is generally not lower than 50,000. The preferred polyolefin has a weight average molecular weight within the range of 100,000 - 350,000.

The method for manufacturing a polyolefin strip, in accordance with the present invention, includes the steps of calendering a substrate sheet composed primarily of polyolefin having a weight average molecular weight of not higher than 500,000, and stretching the calendered sheet so that the substrate sheet is uniaxially oriented at an overall orientation ratio of at least 10.

Since the substrate sheet composed primarily of polyolefin having a weight average molecular weight of not higher than 500,000 is uniaxially oriented at an overall orientation ratio of at least 10, via calendering and stretching steps, the uniaxially oriented sheet thus obtained can also be utilized to form the aforementioned synthetic resin line for constituting the polyolefin strip, in accordance with the present invention, which has an effectively improved torsion retaining property.

In the method according to the present invention for manufacturing a polyolefin strip, the substrate sheet composed primarily of polyolefin having a weight average molecular weight of not higher than 500,000 can be uniaxially oriented, without difficulty, at an overall orientation ratio of at least 10 by undergoing the above-stated calendering and stretching steps.

Preferably, the method for manufacturing a polyolefin strip, in accordance with the present invention, may further includes, after the aforementioned stretching step, a step of laminating a soft or non-rigid resin cover layer on at least one surface of the oriented sheet.

It may also be preferred that the method further includes, after the stretching step, a step of laminating two or more of the oriented sheet together to form a laminate sheet.

In the laminating step, it may be more preferred that those oriented sheets, together with at least one thermoplastic sheet having a melting point lower than that of the oriented sheet, are laminated so that the oriented sheets constitute at least top and bottom layers of the laminate sheet.

The method for manufacturing a polyolefin strip, in accordance with the present invention, may further include a step of cutting the above oriented sheet or laminate sheet along its length direction to form a synthetic resin line having a small width dimension. Such a step can be carried out in various fashions.

In a particular aspect of the present invention, after the laminating step, the laminate sheet is passed through a draw die which is thermally controlled to heat the laminate sheet to a temperature below a melting point of polyolefin incorporated in the oriented sheet but not lower than the melting point of the aforementioned thermoplastic resin and which has a cavity gradually varied in its cross-sectional shape along a drawing direction from a rectangle at a die entrance to serially-juxtaposed polygons or circles, so that the laminate sheet is protruded into synthetic resin lines.

3

In another particular aspect of the present invention, the aforementioned oriented sheet or laminated sheet is cut along its length direction to form a synthetic resin line having a predetermined width dimension.

In the method of the present invention, a wing-forming synthetic resin member may further be provided on at least one surface of the synthetic resin line to form wings which extend widthwise beyond side edges of the synthetic resin line. In a preferred embodiment, two of such a wing-forming synthetic resin member are used to interposed therebetween the synthetic resin line, so that they extend widthwise beyond side edges of the synthetic resin line where they are secured together to form the wings.

If such wings are provided, the wing-forming member may preferably have on at least one surface thereof a number of ridges arranged at intervals along a length direction of the synthetic resin line and extending between opposite widthwise ends of the wing-forming member.

In such a case, an angular orientation of the ridges is preferably within ± 20 degrees with respect to a direction perpendicular to the length direction of the synthetic resin line.

In the method for manufacturing a polyolefin strip, in accordance with the present invention, the polyolefin used may preferably be high-density polyethylene.

**BRIEF DESCRIPTION OF THE DRAWINGS**

Figure 1 is a perspective view, generally illustrating a embodiment of a polyolefin strip of the present invention;

Figure 2 is a partly sectioned, diagrammatic side view of an exemplary apparatus for use in manufacturing another embodiment of a polyolefin strip of the present invention;

Figure 3 is a schematic sectional view, illustrating the sequentially stacked, oriented sheets and linear low-density polyethylene sheets prior to being introduced to the hot press;

Figure 4 is a cross-sectional view taken along the line A-A of Figure 2, illustrating a cross-sectional shape of the die cavity at a die entrance;

Figure 5 is a cross-sectional view taken along the line B-B of Figure 2, illustrating a cross-sectional shape of the die cavity at a die exit;

Figure 6 is a cross-sectional view of the synthetic resin lines protruded from the draw dies;

Figure 7 is a perspective view, generally illustrating a still another embodiment of a polyolefin strip of the present invention having the ridges extending along the width direction of the strip;

Figure 8 is a plan view of the polyolefin strip shown in Figure 7;

Figure 9 is a plan view of a still another embodiment of a polyolefin strip of the invention having the ridges angularly oriented with respect to the width direction of the strip;

Figure 10 is a partly-sectioned side view, generally illustrating the manner to evaluate the torsion retaining properties of twist-tie strips; and

Figure 11 is a perspective view, generally illustrating the manner to evaluate the torsion retaining powers of twist-tie strips.

**DETAILED DESCRIPTION OF THE PREFERRED EMBODIMENTS**

The preferred embodiments of the present invention will be now explained with suitable reference to Figures.

In the present invention, a sheet is employed which is comprised primarily of polyolefin having a weight average molecular weight of not greater than 500,000. That is, the inventors of the present application have found that a polyolefin line uniaxially oriented at a high orientation ratio, when bent by hand to a shape, can sustain or retain the shape given by the bending even after release of hand. The present invention is based on their realization that such polyolefin line is applicable to a twist-tie strip, dried or artificial flower making and the like.

Examples of the aforementioned polyolefin having a weight average molecular weight of not greater than 500,000 include homopolymers such as polyethylene, polypropylene, polybutene and polypentene; and olefin copolymers containing up to 10 % by weight of vinyl monomer units such as vinyl acetate, vinyl alcohol, vinyl chloride or acrylic acid.

Particularly where high-density polyolefin is used, the highly-oriented polyolefin line exhibits an excellent torsion retaining property or torsion retention. Thus, the use of high-density polyolefin is preferred. For example, where polyethylene is used having a relatively low density, the orientation thereof may not improve its properties, such as strength and elastic modulus, to a satisfactory extent, to result in the failure for the oriented line to exhibit a sufficient degree of torsion retention. Good results are obtained if such polyethylene has a density of at least 0.94 g/cm$^3$. Accordingly, the high-density polyethylene having the specified density is preferred for its ability to impart excellent shape retention and sufficient rigidity to a resulting line or twist-tie strip.

It is important that a weight average molecular weight of the aforementioned polyolefin be not greater than 500,000. If it goes beyond 500,000, a polyolefin sheet prepared therefrom may exhibit a reduced degree of extensibility, insufficient to be effectively oriented by a conventional stretching technique utilizing no solvent, to result in the formation of a twist-tie strip having an insufficient degree of torsion retention. More preferably, polyolefin is used having a weight average molecular weight of not greater than 350,000. A lower limit of its weight average molecular weight is not particularly specified, but is preferably 50,000 or higher, more preferably 100,000 or higher.

A melt index (MI) of the aforementioned polyolefin, an indication value associated with its molecular weight, is not particularly specified, either. However, in a case where high-density polyethylene is used as the particular polyolefin selected, an MI of the high-density polyethylene is preferably in the range of 0.1 - 20, more preferably in the range of 0.9 - 10. If its MI is below 0.1, an increased load may be imposed on an extruder. On the other hand, if its MI goes beyond 20, extrusion of such high-density polyethylene may become difficult.

In the present invention, one type of polyolefin having a weight average molecular weight of not greater than 500,000 may be used solely or in combination with the other type of polyolefin. In the latter case, 100 parts of the one type of polyolefin having a weight average molecular weight of not greater than 500,000 may be mixed with 30 or lower parts by weight of the other type of polyolefin, such as low-density polyethylene, linear polyethylene, acid-modified linear polyethylene, or ethylene-vinyl acetate copolymer.

It is also preferred that a soft component is added to the aforementioned polyolefin. A type of the soft component is not particularly specified, but is preferably the soft or non-rigid resin having an elastic modulus in tension of not greater than 5,000 kg/cm$^2$. Suitable soft or non-rigid resins include SEBS (styrene-ethylene-butylene-styrene block copolymer) and polyvinyl acetate. The incorporation of such a soft or non-rigid resin component improves a torsion retaining property of the polyolefin strip of the present invention, so that, when twisted to a shape, it exhibits an increased ability to retain the shape given by twisting. Also, the presence of the soft or non-rigid resin component at an exposed surface of the polyolefin strip enhances its frictional resistance, leading to the increased torsion retention power of the strip. If an elastic modulus in tension of the polyolefin strip incorporating the soft component exceeds 5,000 kg/cm$^2$, the excessively increased modulus may adversely affect the torsion retaining property of the polyolefin strip.

Applicable soft components are not limited to those listed above, and may be low-molecular weight compounds such as tackifiers. Useful tackifiers include known tackifiers such as rosin resins, terpene resins, petroleum resins, aliphatic saturated hydrocarbon resins and alicyclic saturated hydrocarbon resins. Preferred may be the alicyclic saturated hydrocarbon resin tackifier for its desired compatibility with polyolefin and colorability.

The above-described soft component may be added in the amount preferably of up to 80 parts by weight, more preferably of 20 to 50 parts by weight, based on 100 parts by weight of the aforesaid polyolefin resin. On the other hand, the addition thereof in the amount of greater than 80 parts by weight may adversely affect the torsion retention of the resulting polyolefin strip.

A technique by which the aforementioned soft component is formed into a cover layer is not particularly specified, and may be a dry lamination, extrusion lamination or heat lamination. During the cover layer-forming process, embossing may be applied to a surface of the cover layer formed.

A thickness of the soft or non-rigid resin cover layer is not particularly specified either, but may preferably be in the range of 1 - 250 μm, more preferably in the range of 5 - 200 μm. The attempt to form the soft or non-rigid resin cover layer to a thickness of less than 1 μm usually accompanies process difficulties. On the other hand, if the soft or non-rigid resin cover sheet is formed to a thickness of greater than 250 μm, a polyolefin strip which, when twisted to a shape, shows difficulty in retaining the shape given by the twisting.

A method for manufacturing one representative embodiment of the polyolefin strip of the present invention, will be now explained more specifically. In the following descriptions, high-density polyethylene is solely used as an illustrative polyolefin resin for use in the manufacture of the polyolefin twist-tie strip. This, however, is not intended to preclude the use of other types of polyolefin resins such as those described hereinabove. For example, high-density polyethylene may be replaced by the aforementioned mixture of polyolefin having a weight average molecular weight of not greater than 500,000 and another type of polyolefin, or the mixture of polyolefin having a weight average molecular weight of not greater than 500,000 and the soft component.

Where high-density polyethylene is melt processed as by an extruder, its melt temperature may preferably at least 130 °C, more preferably at least 150 °C. The melt temperature below 130 °C may cause incomplete melting of high-density polyethylene, which then imposes an increased load on a processing machine such as an extruder. On the other hand, if melt processed at an excessively high temperature, high-density polyethylene may be caused to decompose, discolor, or decrease in strength, accompanied the reduced molecular weight. Accordingly, it is desired that the melt temperature is controlled not to substantially exceed 250 °C.

A technique used to form high-density polyethylene into a substrate sheet is not limited to extrusion. Other techniques, such as rolling or the like, can also be suitably employed. Although not particularly limited, a thickness of the substrate sheet is preferably in the range of 2 - 5 mm. If it is less than 2 mm, the substrate sheet may be excessively thinned when stretched at the later-specified ratio, which makes it difficult to obtain a twist-tie strip having a sufficient degree of torsion retention. If it goes beyond 5 mm, it becomes difficult to subject the substrate sheet to stretching and succeeding processings.

Since the substrate sheet obtained in the manner as described above is relatively thick, it may preferably be rolled or calendered prior to being stretched. Calendering may be carried out by providing a clearance, smaller in dimension than the substrate sheet thickness, between a pair of counterrotating calender rolls, and introducing the substrate sheet into the clearance between the pair of calender rolls, so that the substrate sheet is reduced in thickness and extended in its length direction.

The term "calendering", as used herein, refers to a step in which a sheet is allowed to elongate substantially solely in a direction of its conveyance (drawing direction) and is substantially prevented from elongating in its width direction (transverse direction).

If a temperature of the substrate sheet while being calendered is excessively low, uniform calendering may be impaired by the increased pressure force to the sheet. On the other hand, if it is excessively elevated, the substrate sheet may be melt broken. Thus, the temperature of the substrate sheet while being calendered may be kept preferably within the range of 70 - 125 °C, more preferably within the range of 90 - 120 °C.

An excessive low calender ratio may result not only in the failure to gain an expected calendering effect, but also in imposing the increased load on the subsequent stretching process. In contrast, if the calender ratio is excessively high, uniform calendering may be impaired by the increased pressure force and the substrate sheet may be thinned excessively to result in breakage thereof when subsequently subjected to stretching. Accordingly, the calender ratio is preferably in the range of 2 - 10. The calender ratio, as used herein, is defined as follows:

$$\text{Calender ratio} = T_1/T_2$$

where,

$T_1$ = thickness of a substrate sheet prior to being subjected to calendering; and
$T_2$ = thickness of the substrate sheet after being subjected to calendering.

The calendered sheet may be stretched by a conventional uniaxial stretching technique. This uniaxial stretching technique generally employs two pairs of pinch rolls, i.e., a pair of feed rolls and another pair of draw rolls, driven at different speeds, through which a sheet is passed. The sheet while heated is stretched in its length direction (drawing direction) to uniaxially orient the sheet. The uniaxial stretching may be carried out more than once, i.e., in two or more stages. In this uniaxial stretching, a ratio in rotating speed of the pair of draw rolls to the other pair of feed rolls is defined as a stretch ratio. When the aforementioned calender ratio is taken into account, this stretch ratio is suitably selected within the range of 2 - 10 so that a below-specified overall orientation ratio is at least 10.

The overall orientation ratio, as used herein, is a product of the calender ratio and the stretch ratio. In the present invention, the overall orientation ratio must be at least 10 and is preferably at least 15. If the overall orientation ratio falls below 10, the oriented sheet, when subjected to twisting, exhibits an increased elasticity acting to restore its original shape, resulting in the failure to obtain a twist-tie strip having an sufficient degree of shape retaining property.

An upper limit of the overall orientation ratio is not particularly specified, but is preferably 40, more preferably 30. If the overall orientation ratio goes beyond 40, a sheet may be thinned excessively to adversely affect a shape retaining property of a resulting twist-tie strip.

When subjected to stretching, a sheet is maintained at a temperature preferably in the range of 70 - 120 °C. The sheet temperature of either below 70 °C or above 120 °C may result in an increased occurrence for the sheet to break while stretched.

If properly stretched in the manner as stated above, the uniaxially oriented polyolefin line is obtained. This polyolefin line may be cut, if necessary, to reduce its width dimension suitable for use as a twist-tie strip.

A thickness of the polyolefin line thus obtained is not particularly specified, but may preferably in the range of 150 - 500 μm. If it is below 150 μm, an insufficient degree of torsion retention may result. On the other hand, if it is above 500 μm, an increased resistance to twisting may result. In order to obtain the polyolefin line having a thickness of 150 μm or greater, it is desired to use the substrate sheet which, prior to being calendered, has a minimum thickness of 2 mm, as specified above.

When necessary, two or more of the aforementioned polyolefin lines may be stacked together to provide a laminate-form polyolefin line to insure a proper thickness. Also, a cross-sectional shape of the polyolefin line is not particularly specified.

When needed, the aforementioned polyolefin line may be subjected to a crosslinking treatment which is effective in enhancing a heat resistance thereof.

Any technique can be employed to crosslink the polyolefin line. Crosslinking can be achieved, for example, by a chemical method utilizing peroxides, or by exposure to UV or electron radiation, as appropriate to the type of polyolefin line being crosslinked.

A level of crosslinking can be generally evaluated from a percentage of a weight of insoluble residual gel remained after the crosslinked polyolefin line is immersed in hot xylene at 120 °C for 24 hours relative to a weight of the crosslinked polyolefin line prior to being immersed in hot xylene, i.e., from a gel fraction. In the present invention, the level of crosslinking may be preferably at least 20 %, more preferably at least 50 %, as evaluated by gel fraction. If the gel fraction is below 20 %, an insufficient torsion retention power may result at higher temperatures.

The following examples illustrate this invention.

## EXAMPLE 1

High-density polyethylene having a weight average molecular weight of $3.3 \times 10^5$, a melt index (MI) of 1.0, a density of 0.961 g/cm$^3$ and a melting point of 135 °C was melt kneaded at a resin temperature of about 200 °C and extruded, by using a corotating twin-screw extruder, into a 70 mm wide and 2.5 mm thick sheet which was subsequently taken up. The sheet was then delivered to pass through heat rolls maintained at 120 °C to thereby roll or calender the sheet at a calender ratio of 9.

Next, a hot-air heating type two-stage stretching machine was employed to stretch the calendered sheet at a total stretch ratio of 2.6, i.e., stretch the calendered sheet at a stretch ratio of 1.8 in a first stage and at a stretch ratio of 1.6 in a second stage, respectively under an orientation temperature of 100 °C to uniaxially orient the sheet.

An overall orientation ratio, a product of the aforementioned calender ratio and stretch ratio, was about 26. The uniaxially oriented sheet had a width of 35 mm and a thickness of 200 μm as well as a smooth surface. Slitting was applied to obtain a sample of 4 mm wide polyethylene strip of Example 1.

## EXAMPLE 2

100 parts by weight of high-density polyethylene used in Example 1 and 2 parts by weight of benzophenone were mixed. The mixture was then supplied to a corotating twin-screw extruder and processed in the manner as in Example 1 to obtain a 4 mm wide oriented line.

The oriented line thus obtained was then crosslinked by exposure to an ultraviolet radiation for a second, more specifically by exposure for a second to a high-pressure mercury lamp having an output of 120 W/cm and spaced 50 mm from the oriented line to provide a sample of polyethylene strip of Example 2.

Its crosslinking level was evaluated in terms of a gel fraction, i.e., a percentage of a weight of an insoluble residue remained after the crosslinked, oriented line was dissolved in hot xylene at 120 °C for 24 hours relative to a weight of the crosslinked, oriented line prior to being dissolved in hot xylene. The gel fraction was determined to be 60 %.

## EXAMPLE 3

100 parts by weight of high-density polyethylene used in Example 1 and 30 parts by weight of a tackifier (alicyclic saturated hydrocarbon resin ALCON P-100, name used in trade and manufactured by Arakawa Chemicals Industries Ltd.) were mixed to provide a mixture as a starting material. Except the above, the procedure of Example 1 was followed to obtain a sample of polyethylene strip of Example 3.

## EXAMPLE 4

A 20 μm thick film composed of ethylene-vinyl acetate copolymer (vinyl acetate content = 8 wt%, MI=1.5, mp=99°C) was laminated onto each surface of the strip obtained in Example 1 by a heat press maintained at 100 °C to obtain a sample of polyethylene strip of Example 4.

## COMPARATIVE EXAMPLE 1

The procedure of Example 1 was followed, except that a calender ratio was changed to 5, a stretch ratio to 1.6, and an overall orientation ratio accordingly to 8, to obtain a sample of polyethylene strip of Comparative Example 1.

## EVALUATION

The polyethylene strips obtained in the above Examples 1 through 4 and Comparative Example 1 were respectively evaluated for (1) torsion retaining property and measured for (2) torsion retaining power according to the following procedures. The results are given in Table 1.

(1) Evaluation of torsion retaining property

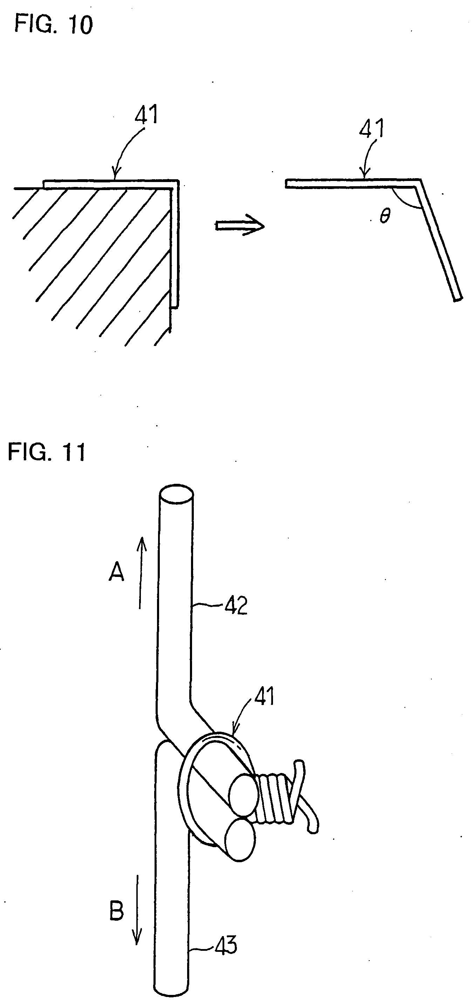

As illustrated in Figure 10, an external force was applied to bend a sample strip 41 inwardly at a right angle and thereafter released. Then, an internal angle θ defined between adjacent two sides, as illustrated in a right portion of Figure 10, was measured for the angled strip 41. The internal angle θ is considered to approach 90 degrees, if the strip has a superior torsion retaining property, that is, its elasticity is insufficiently low to restore its original shape. On the other hand, the internal angle θ is considered to approach 180 degrees, if the strip has an inferior torsion retaining property, that is, its elasticity is sufficiently high to restore its original shape.

(2) Measurement of torsion retaining power

Opposite ends of the strip 41 were twist tied together by two and a half turns to form a loop having an inner diameter of 20 mm. Two iron bars 42 and 43, each having a diameter of 4 mm, were then inserted into the loop, as illustrated in Figure 11.
Those iron bars 42 and 43 were subsequently moved away from each other, i.e., in opposite directions, as shown by A and B in Figure 11, at a speed of 100 mm/min. A maximum strength at which the strip was untied was reported as its torsion retaining power. The results are given in the following Table 1.
In addition, the above measurement was repeated at 100 °C to evaluate a high-temperature torsion retaining power of the strip.

Table 1

|  | INTERNAL ANGLE (DEGREES) | TORSION RETAINING POWER[1] (kg) | TORSION RETAINING POWER[2] (kg) |
|---|---|---|---|
| Example 1 | 103 | 1.1 | 0.5 |
| Example 2 | 105 | 1.1 | 0.9 |
| Example 3 | 98 | 1.8 | - |
| Example 4 | 108 | 2.0 | - |
| Comp. Example 1 | 128 | 0.5 | - |

(1) at Ordinary Temperature
(2) at 100 °C

As can be appreciated from Table 1, the strip obtained in Comparative Example 1 exhibits a relatively low torsion retaining power of 0.5 kg at ordinary temperature. In contrast, the strips obtained in Examples 1 through 4 all exhibit relatively high torsion retaining powers at ordinary temperature, 1.1 kg or higher, as well as relatively sufficient torsion retaining properties. This is believed due to their use of the oriented sheet wherein the overall orientation ratio is not less than 10.
As previously stated, in accordance with the present invention, two or more of the oriented polyolefin lines may be laminated together to provide a laminate-form polyolefin line. Any method can be employed to integrally laminate those polyolefin lines. However, if the improved torsion retaining properties of those individual polyolefin lines to be maintained, their crystalline orientations are desired to be maintained. It is thus preferred that the oriented polyolefin lines are laminated together under a temperature of below their melting point. Suitable methods include a lamination bonding method wherein a laminating sheet is interposed between the oriented sheets for bonding thereof under a temperature of below melting points of the oriented sheets, and a welding method wherein the oriented sheets are immersed in an organic solvent capable of dissolving those sheets for bonding thereof under a temperature of below melting points of the oriented sheets.
When desired to impart an enhanced adherence, the oriented sheet may be passed and continuously compressed between a pair of rolls, i.e., between a roll controlled at a temperature at least 10 °C higher than a melting point of the oriented sheet and a counter roll controlled at a temperature lower than the melting point, so that one surface portion of the oriented sheet is brought into a molten state.
The laminating sheet for use in the aforementioned lamination bonding method may be suitably composed of low-density polyethylene, linear low-density polyethylene or the like. Examples of suitable solvents, for use in the aforementioned welding method, include styrene, xylene, benzene, toluene and the like.
A thickness of the laminate sheet incorporating two or more of the oriented sheet is not particularly specified, but an area of its section cut along its width direction, i.e., its cross-sectional area may preferably be within the range of 0.5 - 10 mm$^2$. The reduction of its cross-sectional area to less than 0.5 mm$^2$ may result in the failure to obtain a sufficient degree of twist-tying power. On the other hand, if the cross-sectional area is increased to greater than 10 mm$^2$, the laminate sheet may be increased in torsional modulus sufficiently to adversely affect its torsion retaining property.

Also, a cross-sectional shape of the laminate sheet is not particularly specified. If the laminate sheet is excessively wide, it may be cut to a width as appropriate for use as the twist-tie strip. Where the above-described laminate sheet is utilized for the aforementioned laminate-form polyolefin line, at least one surface thereof may be covered with a soft or non-rigid resin layer. Since such a cover layer exhibits a higher degree of surface friction, the provision thereof on the laminate-form polyolefin line results in a marked increase in torsion retaining property of the combination for use as a twist-tie strip. A type of such a soft or non-rigid resin and a covering technique etc. are earlier illustrated in the description of the single layer-form polyolefin line.

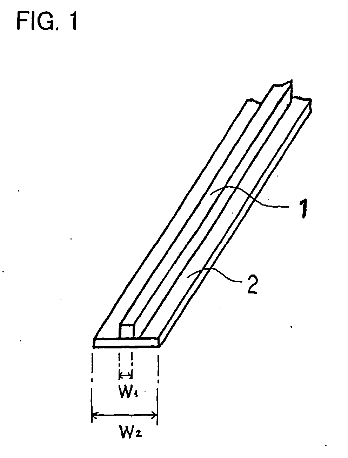

Figure 1 is a perspective view of one embodiment of a twist-tie strip having a cover layer provided on one surface of such a laminate-form polyolefin line. As shown in Figure 1, provided on one surface of a laminate-form polyolefin line 1 is a cover layer 2. It is preferred that a width $W_2$ of the cover layer 2 is made greater than a width $W_1$ of the laminate-form polyolefin line 1. Such a construction is effective to further improve a twist-tying power of the strip. The width $W_2$ of the cover layer 2 is preferably not greater than 15 mm, more preferably within the range of 1.5 - 10 mm. If the width $W_2$ of the cover layer 2 is increased excessively, the accordingly increased elasticity thereof may adversely affect a torsion retaining power of the twist-tie strip.

## EXAMPLE 5

High-density polyethylene used in Example 1 was melt kneaded at a resin temperature of about 200 °C and extruded, by using a corotating twin-screw extruder, into a 70 mm wide and 2.5 mm thick sheet which was subsequently taken up. The sheet was then delivered to pass through heat rolls controlled at 120 °C to thereby roll or calender the sheet at a calender ratio of 7.

Next, a hot-air heating type two-stage stretching machine was employed to stretch the calendered sheet at a total stretch ratio of 3.0, i.e., stretch the calendered sheet at a stretch ratio of 1.5 in a first stage and at a stretch ratio of 2.0 in a second stage, respectively under an orientation temperature of 100 °C to uniaxially orient the sheet.

An overall orientation ratio, a product of the calender ratio and stretch ratio, amounted to 21. The uniaxially oriented sheet measured a width of 35 mm and a thickness of 200 $\mu$m, as well as showed a smooth surface.

Four of the above-obtained uniaxially oriented sheet were stacked, with a 30 $\mu$m thick, LLDPE (linear low density polyethylene) laminating sheet (melting point of 120°C) being interposed between adjacent two oriented sheets. While fixed at its both ends, the stack was thermally integrated by a hand press controlled at 120 °C to form a laminate sheet.

The laminate sheet thus formed was then slit to a width of 3.5 mm (cross-sectional area of 3.1 mm$^2$) to obtain a sample of polyolefin strip of Example 5.

## EXAMPLE 6

100 parts by weight of high-density polyethylene used in Example 1 and 2 parts by weight of benzophenone were mixed. The mixture was then supplied to a corotating twin-screw extruder and thereafter processed in the same manner as in Example 5 to obtain an uniaxially oriented sheet.

The uniaxially oriented sheet thus obtained was then crosslinked by exposure to an ultraviolet radiation for a second, more specifically by exposure for a second to a high-pressure mercury lamp having an output of 120 W/cm and spaced 50 mm from the oriented sheet. A crosslinking level was evaluated in terms of a gel fraction, i.e., a percentage of a weight of an insoluble residue remained after the crosslinked sheet was dissolved in 120 °C xylene for 24 hours relative to a weight of the crosslinked sheet prior to being dissolved. The gel fraction was determined to be 60 %.

In addition, the laminating procedure of Example 5 was followed to form a laminate sheet which was subsequently slit to a width of 3.5 mm to obtain a sample of polyolefin strip of Example 6.

## EXAMPLE 7

A film (120 $\mu$m thick and 5 mm wide) composed of ethylene-vinyl acetate copolymer (vinyl acetate content = 8 wt%, MI=1.5, mp=99°C) was laminated onto the polyolefin strip obtained in Example 5 at a working temperature of 100 °C to obtain a sample of polyolefin strip of Example 7.

## EXAMPLE 8

The procedure of Example 5 was repeated, except that the stacking number of the uniaxially oriented sheets was altered from 4 to 2 and the resulting laminate sheet was slit to a width of 0.5 mm (cross-sectional area of 0.2 mm$^2$), to prepare a sample of polyolefin strip of Example 8.

## EXAMPLE 9

The procedure of Example 7 was repeated, except that a width of the film composed of ethylene-vinyl acetate copolymer (vinyl acetate content = 8 wt%, MI=1.5, mp=99°C) was altered from 5 mm to 20 mm, to prepare a sample of polyolefin strip of Example 9.

## COMPARATIVE EXAMPLE 2

The procedure of Example 5 was repeated, except that a calender ratio was altered to 5, a stretch ratio to 1.6 and an overall orientation ratio accordingly to 8 and the resulting laminate sheet was cut to a cross-sectional area of 5.2 mm$^2$, to prepare a sample of polyolefin strip of Comparative Example 2.

The polyolefin strips obtained in Examples 5 through 9 and Comparative Example 2 were respectively evaluated for torsion retaining power, analogously to Example 1. The results are given in the following Table 2.

Table 2

|  | TORSION RETAINING POWER[1] (kg) | TORSION RETAINING POWER[2] (kg) | TORSIONAL RIGIDITY |
|---|---|---|---|
| Example 5 | 2.0 | 1.4 | LOW |
| Example 6 | 2.0 | 1.5 | LOW |
| Example 7 | 3.7 | - | LOW |
| Example 8 | 1.1 | - | LOW |
| Example 9 | 1.4 | - | SLIGHTLY HIGH |
| Comp. Example 2 | 0.3 | - | VERY HIGH |

(1) at Ordinary Temperature
(2) at 100 °C

As will be appreciated from Table 2, the polyolefin strip of Comparative Example 2 exhibits a relatively lower degree of torsion retaining property, which is considered due to the reduced stretch ratio used. The polyolefin strip of Example 8 exhibits a slightly lower torsion retaining power, which is considered due to the reduced cross-sectional area of the laminate sheet. The polyolefin strip of Example 9 exhibits a slightly higher resistance to twisting and a slightly lower torsion retaining power, which is considered due to the excessively increased width of the cover layer.

The following embodiment illustrates a method by which a plurality of the uniaxially oriented sheets are combined together to provide the laminate sheet.

In this particular embodiment, the plurality of oriented polyolefin sheets, together with at least one thermoplastic resin sheet having a melting point of lower than that of the oriented polyolefin sheet, are stacked together for lamination thereof, so that the oriented polyolefin sheets constitute at least top and bottom layers of the laminate sheet.

As specified earlier, this oriented polyolefin sheet is prepared by orienting a substrate polyolefin sheet at an overall orientation ratio of at least 10. If oriented at the overall orientation ratio of below 10, the oriented polyolefin sheet, if twisted, exhibits a reduced torsion retention, resulting in the formation of a polyolefin strip having an inferior torsion retention. The overall orientation ratio is preferably not higher than 40. If processed at the overall orientation ratio of above 40, the oriented polyolefin sheet may be thinned excessively, which requires an increased number thereof to be laminated for subsequent protrusion. This impairs a process stability.

A type of thermoplastic resin which constitutes the aforementioned thermoplastic resin sheet having a melting point of lower than that of the oriented polyolefin sheet is not particularly specified, as long as it has a melting point of lower than that of the polyolefin resin used to constitute the oriented polyolefin sheet and exhibits a good adhesion to the polyolefin resin. However, if a difference in melting point between the thermoplastic and polyolefin resins is excessively small, the oriented polyolefin sheet may undergo a marked reduction in rigidity at a temperature which is sufficiently high to melt the thermoplastic resin but is lower than the melting point of the polyolefin resin. This impairs a stable production of twist-tie strips as by protrusion. It is accordingly preferred that the aforementioned melting point differential is not small than 5 °C.

Where the above oriented polyolefin sheet is comprised of high-density polyethylene, a suitable thermoplastic resin which can be used to constitute the thermoplastic resin sheet having a melting point lower than that of the oriented polyolefin sheet may be low-density polyethylene, ethylene-vinyl acetate copolymer, polyvinyl acetate or the like.

When necessary, various types of compounding additives functioning, for example, to improve torsion retention or processability, may further be incorporated in the oriented polyolefin sheet or in the thermoplastic resin sheet.

The laminated sheet obtained by using the above-illustrated method may preferably be subjected to protrusion to provide a polyolefin line for suitable use as a polyolefin strip. In this protrusion process, a draw die is employed which is constructed to heat the laminated sheet to a temperature below a melting point of the aforementioned polyolefin but not lower than a melting point of the aforementioned thermoplastic resin, and which has an internal cavity having a cross-section that is varied in shape along a draw direction from a rectangle at a die entrance gradually to serially juxtaposed polygons or circles. Accordingly, the laminate sheet can be protruded from such a draw die into serially juxtaposed polyolefin lines each having a polygonally- or circularly-shaped cross-section.

When protrusion is carried out utilizing the die having the aforementioned cavity through which the laminated sheet passes while heated to the above-specified temperature, the thermoplastic resin melt flows to follow the varying cross-sectional shape of the cavity, so that the laminate sheet, as a whole, is deformed without difficulty to the serially juxtaposed polyolefin lines each having a polygonally- or circularly-shaped cross-section. This facilitates production of polyolefin lines having a polygonally- or circularly-shaped cross-section, as well as enabling manufacture of polyolefin strips having excellent torsion retaining properties at a high level of productivity.

The following example more specifically illustrates the aforementioned method in which two or more of the oriented polyolefin sheet and at least one thermoplastic resin sheet having a melting point lower than that of the polyolefin sheet are used to form the laminate sheet which is subsequently protruded to produce the polyolefin lines. Also, the following example explains a specific case wherein the oriented polyolefin sheets and thermoplastic resin sheet are composed of high-density polyethylene and linear low-density polyethylene, respectively.

The high-density polyethylene substrate sheet as well as the linear low-density polyethylene sheet are first formed. Suitable sheet-forming techniques include extrusion, rolling and calendering. Extrusion may preferably be employed which utilizes a die, such as a T-die, as appropriate to purposes of the present invention.

The reduced resin temperature during the sheet-forming process may cause insufficient melting of polyethylene possibly leading to an increased load upon an extruder. On the other hand, the excessively elevated resin temperature may cause decomposition of polyethylene possibly leading to discoloring of either polyethylene sheet. The decrease in strength thereof resulting from the reduced molecular weight may also result.

It is accordingly preferred that the resin temperature, during the sheet-forming process, is maintained within the range of 130 - 250 °C.

A thickness of the high-density polyethylene substrate sheet is not particularly specified, but is preferably in the range of 2 - 5 mm. If it is below 2 mm, the orientation thereof at a specified ratio may result in the formation of oriented sheet having an excessively small thickness dimension, which requires the increased number thereof to be laminated prior to being subjected to protrusion. On the other hand, the thickness of greater than 5 mm may result in the difficulty to orient the substrate sheet at the above-specified orientation ratio.

The linear low-density polyethylene sheet is formed preferably through extrusion, as analogous to the aforementioned high-density polyethylene sheet. The linear low-density polyethylene sheet functions to provide a good adhesion between the adjacent high-density polyethylene sheets and also to flow, when heated to above its melting point during the protrusion process, to follow the varying cross-sectional shape of the die cavity. It is accordingly preferred that a thickness of the linear low-density polyethylene sheet is within the range of 20 - 200 $\mu$m. The thickness of less than 20 $\mu$m may be insufficient for the sheet to follow the varying cross-sectional shape of the die cavity. The thickness of greater than 200 $\mu$m may result in the formation of a polyolefin line having a rigidity lower than purposed for the invention.

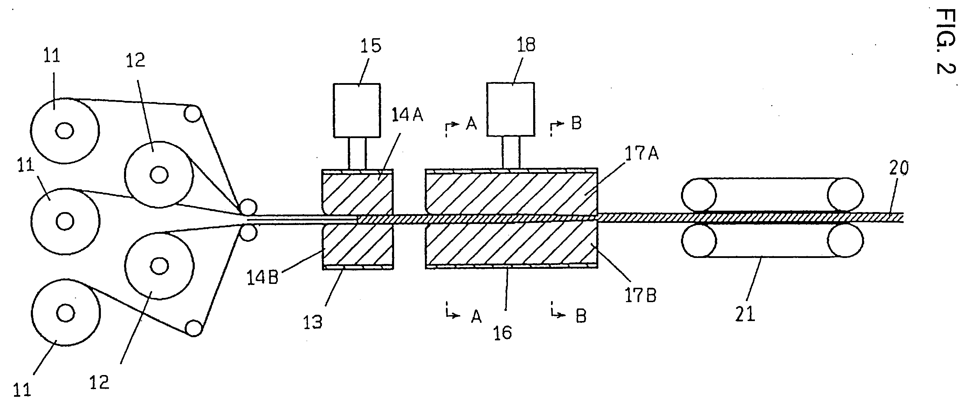

Figure 2 is a partly sectioned, schematic side view of an exemplary apparatus which can be employed to practice the above-described method.

As shown in Figure 2, three uniaxially oriented high-density polyethylene sheets 11 and two linear low-density polyethylene sheets 12 are unwound from their respective rolls such that each low-density polyethylene sheet 12 is interposed between the adjacent two high-density polyethylene sheets 11. As a result, those two types of sheets 11 and 12 are alternatingly stacked, so that top and bottom high-density polyethylene sheets 11 respectively define top and bottom surfaces of the stack, as shown in Figure 3. The stacked sheets are then introduced between compression molds 14A and 14B which have been heated by a band heater 13 to a temperature lower than a melting point of high-density polyethylene but not lower than a melting point of linear low-density polyethylene, and thereafter compressed by an air cylinder 15 so that they are laminated to provide a laminate sheet.

The laminate sheet is then transferred between draw dies 17A and 17B heated by a band heater 16 to a temperature lower than the melting point of high-density polyethylene but not lower than the melting point of linear low-density polyethylene.

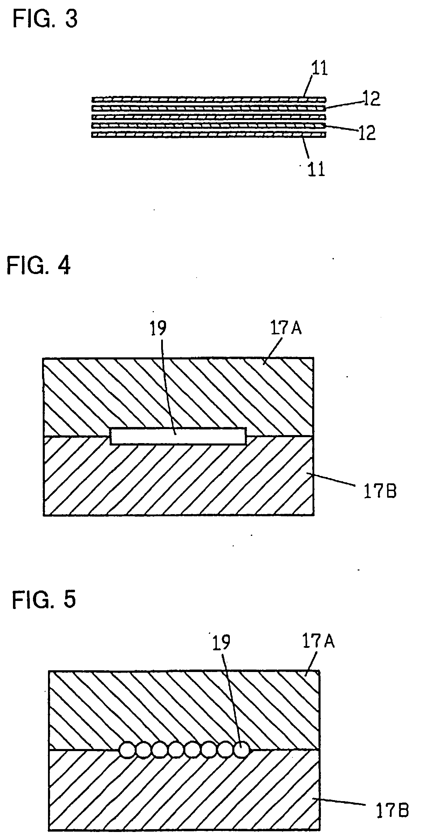

The draw die 17A is constructed such that it can be compressed toward the draw die 17B by the action of an air cylinder 18. As illustrated in Figure 4, the cross-section of the protrusion dies 17A and 17B, taken along the line A-A of Figure 2, is generally rectangular, and accordingly they define a cavity 19 having a rectangular cross-section and having a clearance smaller in dimension than a thickness of the laminate sheet. A cross-section of the cavity 19 is varied in shape along a draw direction from a rectangle gradually to serially juxtaposed circles. The circular cavity portions 19A are serially juxtaposed as shown in Figure 5, which is a cross-sectional view taken along the line B-B of Figure 2. A total cross-sectional area of the serially-juxtaposed circular cavity portions 19A corresponds approximately to a cross-sectional area of the laminate sheet.

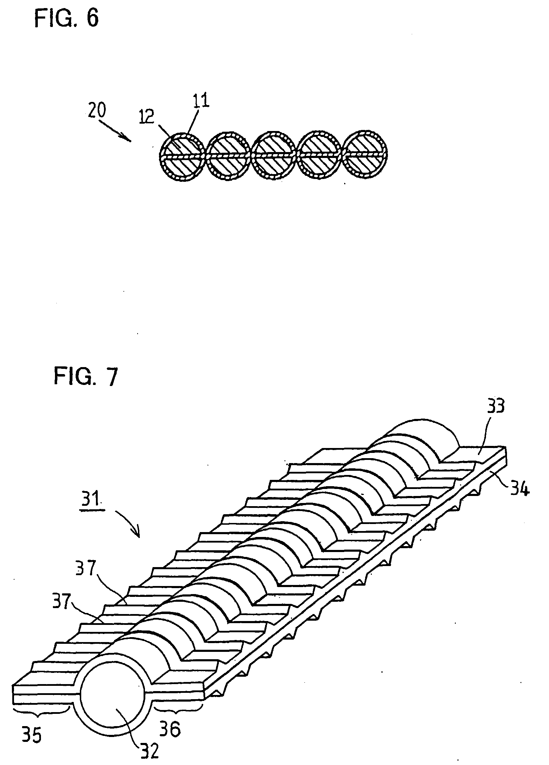

The laminate sheet is heated to a temperature lower than the melting point of high-density polyethylene but not lower than the melting point of linear low-density polyethylene. Heating is generally supplied from the molds 14A and 14B and from the dies 17A and 17B as the laminate sheet passes therethrough. When necessary, heating may be supplied by a heating means such as a hot air or an infrared heater before the laminate sheet enters between the molds 14A and 14B. As the laminate sheet advances in the draw dies 17A and 17B, linear low-density polyethylene undergoes a plastic flow to follow the varying cross-sectional shape of the cavity 19. As a result, the laminate sheet is protruded into a serially juxtaposed, polyolefin lines 20, i.e., twist-tie strips, as shown in Figure 6. In order for the protrusion process to proceed stably, it is important that the stack of oriented high-density polyethylene sheets 11 and linear low-density polyethylene sheets 12 be integrally bonded to each other or laminated prior to being introduced between the draw dies 17A and 17B.

Where selected polyolefin and thermoplastic resins are high-density polyethylene and linear low-density polyethylene resins, respectively, the laminate sheet may be heated to a temperature preferably within the range of 120 - 130 °C, more preferably within the range of 123 - 127 °C which deviates at least 5 °C from the respective melting points of the aforementioned resins. If the temperature falls below 120 °C, linear low-density polyethylene becomes difficult to flow. This requires an increased take-off force which possibly causes fracture of the laminate sheet. If the temperature goes beyond 130 °C, both resins melt. Again in this case, the fracture of the laminate sheet results. It should be understood here that the above-specified temperature is a resin temperature at which the laminate sheet while passed through the draw dies is deformed to change its cross-sectional shape, and that the heat evolution due to shear action etc. during protrusion is taken into consideration when determining a die temperature to which the laminate sheet is exposed.

A cross-section of the draw dies 17A and 17B taken along the line B-B of Figure 2 may be of any shape. In a particular case where one desires to obtain a polyolefin line for use as a twist-tie strip, such a cross-sectional shape may preferably be a polygonal having 6 or more sides or a circle.

The line 20 exiting from the draw dies 17A and 17B is taken off by a take-off unit 21 and formed into a cross-sectional shape as shown in Figure 6.

## EXAMPLE 10

High-density polyethylene used in Example 1 was melt kneaded at a resin temperature of about 200 °C and extruded, by using a corotating twin-screw extruder, into a 70 mm wide and 2.5 mm thick sheet which was subsequently taken up. The sheet was then delivered to pass through heat rolls maintained at 125 °C to thereby roll or calender the sheet at a calender ratio of 9.

Next, a hot-air heating type two-stage stretching machine was employed to stretch the calendered sheet at a total stretch ratio of 2.6, i.e., stretch the calendered sheet at a stretch ratio of 1.8 in a first stage and at a stretch ratio of 1.6 in a second stage, respectively under an orientation temperature of 100 °C to uniaxially orient the sheet.

An overall orientation ratio, a product of the above-specified calender ratio and total stretch ratio, was about 26. The uniaxially oriented sheet measured a width of 35 mm and a thickness of 200 µm as well as had a smooth surface. Slitting was subsequently applied to obtain a 28 mm wide, oriented polyolefin sheet 11.

A 50 µm thick and 28 mm wide thermoplastic resin sheet 12 composed of linear low-density polyethylene having a melt index (MI) of 0.8 and a melting point of 120 °C was used to prepare a stack arranged in a sequence of oriented sheet 11/ thermoplastic resin sheet 12/ oriented sheet 11/ thermoplastic resin sheet 12/ oriented sheet 11. This stack was introduced between the compression molds 14A and 14B which placed the stack under a temperature of 127 °C and a pressure of 3 kg/cm$^2$, so that the individual sheets were integrally bonded to each other to provide a laminate sheet for subsequent delivery to the draw dies 17A and 17B. The draw dies 17A and 17B together defined the cavity 19 having a cross-section rectangularly shaped at an entrance to measure a width of 28 mm and a thickness of 0.95 mm. The cavity 19 was contoured at an exit, as illustrated by 19A in Figure 5, to define juxtaposed 31 circles each having a diameter of 0.9 mm. While passed through the draw dies 17A and 17B, the laminate sheet was subjected to a compres-

sion of 50 kg/cm$^2$ and heated to a temperature of 127 °C. As a result, 31 pieces of polyolefin lines were produced. They were subsequently drawn at a take-off rate of 5 m/min by the take-off unit 21 to obtain lines 20.

## EXAMPLE 11

The procedure of Example 10 was repeated, except that the cavity 19 defined in the draw dies 17A, 17B had a cross-section which was rectangularly shaped at an entrance to measure a width of 28 mm and a thickness of 1.2 mm and contoured at an exit to define juxtaposed 23 circles each having a diameter of 1.2 mm, and that the oriented and thermoplastic resin sheets were stacked in a sequence of oriented sheet 11/ thermoplastic resin sheet 12/ oriented sheet 11/ thermoplastic resin sheet 12/ oriented sheet 11/ thermoplastic resin sheet 12/ oriented sheet 11, and that the draw dies 17A and 17B compressed the stack at a pressure of 70 kg/cm$^2$, to provide lines 20.

## EXAMPLE 12

The procedure of Example 11 was repeated, except that an acid modified polyethylene sheet (product designation: NF550, manufactured by Mitsui Chemicals. Inc. and having a thickness of 50 μm and a width of 28 mm) was used as the thermoplastic sheet 12, to produce lines 20.

## COMPARATIVE EXAMPLE 3

The procedure of Example 10 was followed, except that the high-density polyethylene sheet 11 was calendered at a calender ratio of 4 and uniaxially oriented at a stretch ratio of 1.5 so that the overall orientation ratio amounted to 6, to obtain lines 20.

## EVALUATION

The lines, i.e., resin strands obtained in Examples 10 through 12 and Comparative Example 3 were respectively evaluated for torsion retaining properties in the same manner as in Example 1.

|  | Internal angle (in degrees) indicative of the torsion retaining property |
| --- | --- |
| Example 10 | 99 |
| Example 11 | 102 |
| Example 12 | 96 |
| Comp. Exp. 3 | 130 |

## WINGED TWIST-TIE STRIP

A winged twist-tie strip incorporating a wing extending outwardly from each side edge of a polyolefin line, as well as a method for manufacture thereof, will be now explained.

Such a winged twist-tie strip can be fabricated by laminating on at least one surface of a polyolefin line a wing-forming members which has a width dimension generally larger than the polyolefin line so that it extends beyond the side edges of the polyolefin line.

The polyolefin line may be selected from those for use as the aforementioned polyolefin strip of the present invention. Any type of synthetic resin can be employed to form the wing-forming member. Suitable synthetic resins include polyethylene, polypropylene, polyethylene terephthalate, and polybutylene terephthalate, for example.

An inorganic filler, such as calcium carbonate, talc or barium sulfate, may preferably be incorporated in the synthetic resin to enhance the action of the wings or the below-described ridges serving to increase twist-tying strength. The amount of inorganic filler (if one is used) added may depend upon the type of synthetic resin used, as well as upon the end use desired, but is generally preferred to be in the approximate range of 5 - 60 parts by weight, based on 100 parts by weight of the synthetic resin.

While generally depending upon the diameter of polyolefin line used, a thickness dimension of the wing-forming member is rendered preferably smaller than one half of the diameter of polyolefin line to provide a wing construction which serve to improve twist-tying strength. It is generally preferred that the thickness of wing-forming member is in the approximate range of 10 - 100 μm.

A specific construction of the winged polyolefin strip will be now described with reference to Figures 7 through 9.

As shown in Figure 7, a pair of synthetic resin films 33 and 34 are secured to each other so as to interpose therebetween a polyolefin line 32 to provide a polyolefin strip 31. The pair of synthetic resin films 33 and 34 can be secured to each other by any means including thermal and dry lamination.

The synthetic resin films 33 and 34 have width dimensions generally larger than the polyolefin line 32 so that they extend beyond side edges of the line 32 where they are directly secured together to form wings 35 and 36. The wings 35 and 36, arranged on opposite sides of the line 32, both coextend with the line 32 in its length direction. A distance each wing 35, 36 extends from the respective side edge of the line 32 in a direction perpendicular to the aforementioned length direction, i.e., a width dimension of each wing 35, 36, is not particularly specified. The width of each wing 35, 36 may be suitably dimensioned so that the width of the twist-tie strip always falls within the range of 3 - 20 mm.

When the opposite longitudinal ends of the polyolefin strip 31 are twist-tied together, as by hand, the wings 35 and 36 are, in part, compressively deformed, so that the deformed portions of the wings 35, 36 of one strip end behave to cover the counter strip end of the polyolefin strip 31. This leads to the increased twist-tying strength of the polyolefin strip 31.

The winged polyolefin strip 31 comprised of a synthetic resin, in accordance with the present invention, may further incorporate a number of ridges 37 provided on an exposed surface of at least one of the synthetic resin films 33 and 34. In Figure 7, both of the synthetic resin films 33 and 34 are shown to carry a number of ridges 37 on their respective surfaces. This, however, is not intended to preclude the case where either one of the synthetic resin films 33 or 34 exclusively carries the ridges 37 on its exposed surface.

In Figure 7, the ridges 37 are provided on each synthetic resin film 33, 34 so that they extend along a width direction of the film 33, 34 between the opposite widthwise ends thereof. Also, the ridges 37 are arranged at intervals along the length direction of the polyolefin strip 31.

A cross-section of the ridges 37, a section cut along a line transverse to a length direction of the ridges, may be of any suitable shape, and may be triangular, rectangular, or semi-circular, for example. The cross-section of the ridges 37 may preferably be triangularly, rectangularly, or polygonally shaped to impart the increased twist-tying strength to the strip 31. More preferably, the cross-section has a portion widened toward its top end.

The spacing between adjacent two ridges 37 is not particularly specified, but may preferably be dimensioned to be larger than a width of the ridges 37. If so dimensioned, when the opposite longitudinal ends of the strip are twist-tied together, the ridges 37 on one strip end are brought to come into the respective spaces defined between adjacent two ridges 37 on the counter strip end, resulting in the increased twist-tying strength of the winged polyolefin strip 31.

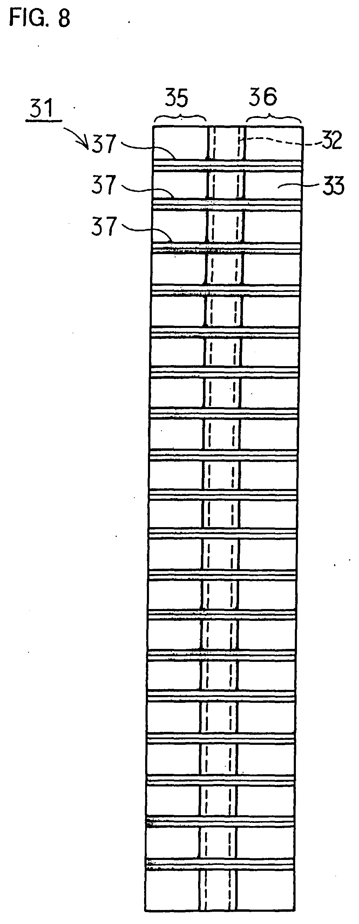

The polyolefin strip 31 shown in Figure 8 has the ridges 37 which extend in a direction perpendicular to the length direction of the polyolefin line 32. The extension of the ridges 37 in the direction transverse to the length direction of the polyolefin line 32 is effective in imparting the increased twist-tying strength to the winged strip 31.

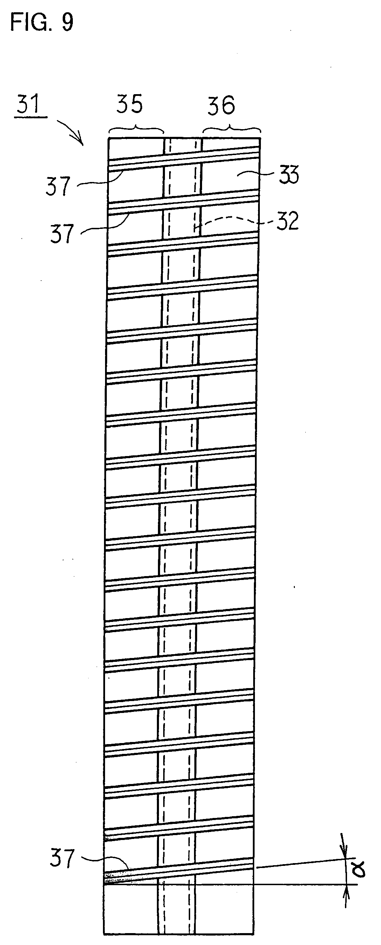

However, the direction along which the ridges 37 extend is permitted to incline at an angle $\alpha$ with respect to the direction perpendicular to the length direction of the line 32, as shown by a plan view in Figure 9. The angle $\alpha$ of inclination is preferably within ± 20 degrees, more preferably within ± 10 degrees. The angle outside this range may result in the reduced twist-tying strength of the winged strip 31.

While the line 32 has a circular cross-section in the embodiment shown in Figure 7, its cross-section may assume a polygonal shape, such as a triangle or rectangle.

## EXAMPLES 13 - 15

(1) Manufacture of a polyolefin line

High-density polyethylene used in Example 1 was melt kneaded at a resin temperature of about 200 °C by using a corotating twin-screw extruder to provide a 70 mm wide and 2.5 mm thick sheet which was subsequently taken up. The sheet obtained was then delivered to pass through heat rolls maintained at 125 °C to thereby roll or calender the sheet at a calender ratio of 9.

Next, a hot-air heating type two-stage stretching machine was employed to stretch the calendered sheet at a total stretch ratio of 2.6, i.e., stretch the calendered sheet at a stretch ratio of 1.8 in a first stage and at a stretch ratio of 1.6 in a second stage, respectively under an orientation temperature of 90 °C to uniaxially orient the sheet.

An overall orientation ratio, a product of the above-specified calender ratio and total stretch ratio, was about 26. The uniaxially oriented sheet measured a width of 35 mm and a thickness of 200 μm as well as had a smooth surface. Slitting was subsequently applied to obtain a 28 mm wide, high-melting point thermoplastic resin sheet "a".

A 50 μm thick and 28 mm wide thermoplastic resin sheet comprised of linear low-density polyethylene having a melt index (MI) of 0.8 and a melting point of 121 °C was used as a low-melting point thermoplastic resin sheet "b".

The following procedure was followed to form a polyolefin line.

Three rolls of the high-melting point thermoplastic resin sheet "a" and two rolls of the low-melting point thermoplastic resin sheet "b" were prepared. These thermoplastic resin sheets "a" and "b" were unrolled so that each low-melting point thermoplastic resin sheet "b" was interposed between two adjacent high-melting point thermoplastic resin sheets "b", for subsequent delivery to compression molds.

The stacked sheets "a" and "b" were then heated to 127 °C and pressed at a pressure of 3 kg/cm$^2$ by the compression molds, so that they were thermally bonded to each other to provide a laminate sheet. The laminate sheet was then fed to draw dies located downstream of the compression molds and protruded therefrom. The draw dies defined a through cavity having a cross-section varied in shape along a draw direction from a rectangle having a width of 28 mm and a height of 0.95 mm at a die entrance gradually to serially juxtaposed 31 circles each having a diameter of 0.9 mm at a die exit.

While passed through the draw dies 17A and 17B, the laminate sheet was gradually deformed into serially juxtaposed 31 lines each having a circular cross-section 0.9 mm in diameter. During the protrusion process, the laminate sheet was subjected to compression of 50 kg/cm$^2$, heated to a temperature of 127 °C, and protruded at a rate of 5 m/min.

As a result, 31 pieces of polyolefin lines were obtained.

(2) Manufacture of winged, polyolefin strips

Two of a 50 μm-thick, synthetic resin film containing 15 parts by weight of calcium carbonate relative to 100 parts by weight of homopolypropylene (density of 0.90 g/cm$^3$ and MI of 3.3) and incorporating a number of ridges provided on its one surface were prepared. Those ridges had a triangular cross-section, measuring a width of 0.1 mm and a height (a distance from a ridge proximal end coterminous with the film surface to a ridge distal end) of 0.19 mm, and were arranged parallel to each other at a regular interval of 2.5 mm. These two synthetic resin films were arranged to interpose therebetween the polyolefin line manufactured in the manner as described above, so that they extended beyond the side edges of the polyolefin line where they were directly secured together. The opposite lateral marginal ends of the combination, where those two synthetic resin films were secured together, were cut along planes parallel to a length direction of the polyolefin line, so that a 4 mm wide, winged polyolefin strip was obtained.

The aforementioned ridges arranged in parallel at a regular interval were oriented in a direction perpendicular to the length direction of the polyolefin line to obtain a winged polyolefin strip of Example 13, and inclined at angles of 10 and 20 degrees relative to the direction perpendicular to the length direction of the polyolefin line to obtain winged, polyolefin strips of Example 14 and 15, respectively.

For comparative purposes, the aforementioned procedure was followed, with the exception that the ridges were precluded from those synthetic resin films, to obtain a winged, polyolefin strip of Example 16.

(3) Evaluation

The winged, polyolefin strips obtained in Examples 13 through 16 were respectively evaluated for torsion retaining power in the same manner as in Example. The results are given in the following Table 3.

Table 3

|  | RIDGES | ANGLE OF INCLINATION (DEGREES) | TORSION RETAINING POWER[1] (kg) |
|---|---|---|---|
| Example 13 | PRESENT | 0 | 4.0 |
| Example 14 | PRESENT | 10 | 3.5 |
| Example 15 | PRESENT | 20 | 2.9 |
| Example 16 | ABSENT | - | 2.5 |

(1) at Ordinary Temperature

The winged, polyolefin strip of Example 16 exhibited a relatively lower level of torsion retaining power of 2.5 kg, which is believed due to the absence of ridges. The winged, polyolefin strips obtained in Examples 13 through 15 exhibited relatively higher levels of torsion retaining power of at least 2.9 kg, which is believed due to the presence of ridges on the synthetic resin films secured together. Among them, the winged, polyolefin strips obtained in Examples 13 and 14 exhibited particularly higher levels of torsion retaining power of at least 3.5 kg, which is believed due to the reduced angular orientation of the ridges, i.e., within 10 degrees, with respect to the direction perpendicular to the length direction of polyolefin line.

**Claims**

1. A polyolefin strip which, when deformed to a shape, exhibits the ability to retain the shape, comprising a synthetic resin line composed primarily of polyolefin having a weight average molecular weight of not higher than 500,000 and uniaxially oriented at an overall orientation ratio of at least 10.

2. The polyolefin strip of claim 1, wherein said synthetic resin line contains 30 or lower parts by weight of polyolefin, different in type from said polyolefin, relative to 100 parts by weight of said polyolefin having a weight average molecular weight of not higher than 500,000.

3. The polyolefin strip of claim 1 or 2, wherein said synthetic resin line contains from 10 to 80 parts by weight of soft component relative to 100 parts by weight of said polyolefin having a weight average molecular weight of not higher than 500,000.

4. The polyolefin strip of any one of claims 1 - 3, wherein two or more of said synthetic resin line are laminated together to provide a laminate-form synthetic resin line.

5. The polyolefin strip of claim 4, wherein said laminate-form synthetic resin line has a cross-sectional area in the range of 0.5 - 10 mm$^2$.

6. The polyolefin strip of claim 4 or 5, wherein a laminating material layer is interposed between adjacent two synthetic resin lines.

7. The polyolefin strip of any one of claims 1 - 6, wherein a soft or non-rigid resin cover layer is provided on at least one surface of said polyolefin strip.

8. The polyolefin strip of any one of claims 1 - 6, wherein a wing-forming member is provided on said synthetic resin line to form wings which extend widthwise beyond side edges of the synthetic resin line.

9. The polyolefin strip of claim 8, wherein said wing-forming member has on at least one surface thereof a number of ridges arranged at intervals along a length direction of the synthetic resin line and extending between opposite widthwise ends of the wing-forming member.

10. The polyolefin strip of claim 9, wherein a direction in which said ridges extend is generally parallel to or inclined at an angle of within ± 20 degrees with respect to a direction perpendicular to the length direction of said synthetic resin line.

11. The polyolefin strip of any one of claims 1 - 10, wherein said polyolefin having a weight average molecular weight of not higher than 500,000 is high-density polyethylene.

12. A method for manufacturing a polyolefin strip comprising the steps of:

    calendering a substrate sheet composed primarily of polyolefin having a weight average molecular weight of not higher than 500,000; and
    stretching the calendered sheet so that said substrate sheet is uniaxially oriented at an overall orientation ratio of at least 10.

13. The method of claim 12 further including a step of laminating a soft or non-rigid resin cover layer on at least one surface of said oriented sheet, after said stretching step.

14. The method of claim 12 further including a step of laminating two or more of said oriented sheet together to form a laminate sheet, after said stretching step.

15. The method of claim 14, wherein, in said laminating step, said two or more oriented sheets, together with at least one thermoplastic sheet having a melting point lower than that of the oriented sheet, were laminated so that the oriented sheets constitute at least top and bottom layers of the laminate sheet.

16. The method of claim 15, wherein, after the laminating step, the laminate sheet is passed through a draw die which is thermally controlled to heat said laminate sheet to a temperature of lower than a melting point of polyolefin incorporated in said oriented sheet but not lower than the melting point of said thermoplastic resin and which has a cavity gradually varied in its cross-sectional shape along a drawing direction from a rectangle at a die entrance to serially-juxtaposed polygons or circles, so that the laminate sheet is protruded into synthetic resin lines.

17. The method of any one of claims 12 - 15 further including a step of cutting said oriented sheet or laminate sheet along its length direction to form a synthetic resin line having a width to be object.

18. The method of claim 16 or 17, wherein a wing-forming synthetic resin member is provided on at least one surface of said synthetic resin line to form wings which extend widthwise beyond side edges of the synthetic resin line.

19. The method of claim 18, wherein said wing-forming member has on at least one surface thereof a number of ridges arranged at intervals along a length direction of the synthetic resin line and extending between opposite widthwise ends of the wing-forming member.

20. The method of claim 19, wherein an angular orientation of said ridges is preferably within ± 20 degrees with respect to a direction perpendicular to the length direction of said synthetic resin line.

21. The method of any one of claims 12 - 20, wherein said polyolefin is high-density polyethylene.

FIG. 1

FIG. 2

FIG. 3

FIG. 4

FIG. 5

FIG. 6

FIG. 7

FIG. 8

FIG. 9

FIG. 10

FIG. 11